Europäisches Patentamt

European Patent Office

Office européen des brevets

(19)

(11) **EP 0 911 672 B1**

(12) **FASCICULE DE BREVET EUROPEEN**

(45) Date de publication et mention
de la délivrance du brevet:
**21.03.2001 Bulletin 2001/12**

(51) Int Cl.⁷: **G02C 7/02**

(21) Numéro de dépôt: **98402533.8**

(22) Date de dépôt: **13.10.1998**

(54) **Lentille ophtalmique multifocale**

Multifokale ophthalmische Linse

Multifocal ophthalmic lens

(84) Etats contractants désignés:
**BE CH DE ES GB IE IT LI NL PT**

(30) Priorité: **16.10.1997 FR 9712989**

(43) Date de publication de la demande:
**28.04.1999 Bulletin 1999/17**

(73) Titulaire: **ESSILOR INTERNATIONAL
(COMPAGNIE GENERALE D'OPTIQUE)
F-94227 Charenton cédex (FR)**

(72) Inventeurs:
 • **Chauveau, Jean-Pierre
  75013 Paris (FR)**
 • **Bourdoncle, Bernard
  75012 Paris (FR)**
 • **Francois, Sandrine
  75014 Paris (FR)**

(74) Mandataire: **Desrousseaux, Grégoire Marie et al
Cabinet HIRSCH-DESROUSSEAUX-POCHART,
34 rue de Bassano
75008 Paris (FR)**

(56) Documents cités:
**EP-A- 0 738 911          GB-A- 2 261 527
GB-A- 2 273 369**

 • **GUILINO G H: "DESIGN PHILOSOPHY FOR
PROGRESSIVE ADDITION LENSES" APPLIED
OPTICS, vol. 32, no. 1, 1 janvier 1993, pages
111-117, XP000331309**

**EP 0 911 672 B1**

**Description**

La présente invention a pour objet une lentille ophtalmique multifocale, comportant une surface asphérique présentant en tout point une sphère moyenne et un cylindre, une zone de vision de loin, une zone de vision de près, une zone de vision intermédiaire, une méridienne principale de progression traversant ces trois zones.

De telles lentilles sont bien connues; on peut parmi ces lentilles multifocales distinguer des lentilles appelées lentilles progressives, adaptées à la vision à toutes les distances, et des lentilles plus spécifiquement dédiées à la vision de près et à la vision intermédiaire.

Les lentilles ophtalmiques multifocales progressives comprennent une zone de vision de loin, une zone de vision de près, une zone de vision intermédiaire, une méridienne principale de progression traversant ces trois zones. Le document FR-A-2 699 294, décrit dans son préambule les différents éléments d'une lentille ophtalmique multifocale progressive (méridienne principale de progression, zone de vision de loin, zone de vision de près, etc.), ainsi que les travaux menés par la demanderesse pour améliorer le confort des porteurs de telles lentilles. Dans ce document est divulguée une lentille d'addition 2 dioptries, présentant une valeur maximale de gradient de sphère moyenne de 0,17 dioptries par millimètre, au voisinage de la méridienne. Dans ce cas, le rapport entre l'addition et cette valeur maximale est voisin de 12 mm. Pour cette lentille, la zone de vision de loin délimitée dans la partie supérieure de la lentille par des lignes isocylindre à 1 dioptrie englobent un secteur angulaire ayant pour origine le centre géométrique de la lentille et un angle au centre supérieur à 150°.

La demanderesse a aussi proposé, pour mieux satisfaire les besoins visuels des presbytes et améliorer le confort des lentilles multifocales progressives, d'adapter la forme de la méridienne principale de progression, en fonction de l'addition de puissance A (demande de brevet FR-A-2 683 642)

Pour de telles lentilles, on appelle addition de puissance A la variation de sphère moyenne entre un point de référence de la zone de vision de loin et un point de référence de la zone de vision de près.

Ces lentilles progressives sont généralement prescrites en fonction de l'amétropie du porteur et de la puissance nécessaire en vision de près.

Il existe aussi des lentilles dédiées plus spécifiquement à la vision de près; ces lentilles ne présentent pas une zone de vision de loin avec un point de référence défini comme dans les lentilles progressives classiques. Ces lentilles sont prescrites en fonction de la puissance nécessaire au porteur en vision de près, indépendamment de la puissance en vision de loin. Une telle lentille est décrite dans une article de l'Opticien Lunetier d'avril 1988, et est commercialisée par la demanderesse sous la marque Essilor Delta; cette lentille est simple à utiliser et aussi facile à supporter qu'une lentille progressive, et est attirante pour la population des presbytes non équipée de lentilles progressives. Cette lentille est aussi décrite dans la demande de brevet FR-A-2 588 973. Elle présente une partie centrale qui équivaut au verre unifocal que l'on utiliserait normalement pour corriger la presbytie, de sorte à assurer une vision de près satisfaisante. Elle présente en outre une légère décroissance de puissance dans la partie supérieure, qui assure au porteur une vision nette aussi au delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

Les lentilles multifocales existantes, qu'elles soient progressives ou dédiées à la vision de près, peuvent encore être améliorées en ce qui concerne la douceur pour faciliter l'adaptation des porteurs à leurs lentilles, et ainsi augmenter ainsi leur confort. En effet, les porteurs de lentilles multifocales ressentent parfois une gêne en vision dynamique, qui peut être à l'origine de troubles comme des maux de têtes ou des nausées. Elles peuvent aussi être améliorées en maintenant une zone de vision de près haute sur le verre et en assurant des champs de vision larges, tant en vision de loin et de près qu'en vision intermédiaire.

La présente invention propose une lentille multifocale progressive qui pallie les inconvénients des lentilles de l'art antérieur et qui assure au porteur une vision périphérique améliorée tout en maintenant de bonnes performances en vision fovéale, facilitant ainsi l'adaptation des porteurs à leurs lentilles. L'invention assure néanmoins une progression rapide de la sphère moyenne, et ménage ainsi une zone de vision de près importante. Elle assure en outre une répartition équilibrée des lignes d'isosphère et d'isocylindre.

L'invention a pour objet une lentille ophtalmique multifocale, comportant une surface asphérique présentant en tout point une sphère moyenne et un cylindre, et comprenant une zone de vision de loin, une zone de vision de près, une zone de vision intermédiaire, une méridienne principale de progression traversant ces trois zones, la zone de vision de loin délimitée dans la partie supérieure de la lentille par des lignes formées des points dont le cylindre est égal à la moitié de l'addition englobant un secteur angulaire ayant pour origine le centre géométrique de la lentille et un angle au centre supérieur à 150°, caractérisée en ce que la longueur principale de progression définie comme le rapport entre l'addition et la pente maximale de sphère moyenne Pmer le long de la méridienne est inférieure à 16 mm; et en ce que la sphère varie de façon monotone en fonction de l'angle, sur un cercle de rayon 20 mm centré sur le centre géométrique de la lentille, de part et d'autre de la méridienne.

Avantageusement, la méridienne principale de progression est constituée des milieux des segments horizontaux reliant les lignes respectives formées des points de cylindre 0,50 dioptries.

Dans un mode de réalisation, la zone de vision de près, délimitée dans la partie inférieure de la lentille par des lignes formées des points dont le cylindre est égal à la moitié de l'addition présente une largeur supérieure à 12 mm à la hauteur d'un point de référence pour la vision de près.

Dans un autre mode de réalisation, ledit angle au centre présente une valeur comprise entre 160° et 170°, de préférence de l'ordre de 165°.

De préférence, le module de la dérivée dS/dθ de la sphère moyenne par rapport à l'angle sur ledit cercle est compris entre 0,005 et 0,015 lorsque l'angle θ est dans les intervalles [30°; 100°] et [270°; 325°].

Avantageusement, le module de la dérivée dS/dθ de la sphère moyenne par rapport à l'angle sur ledit cercle est compris entre 0,01 et 0,04 lorsque l'angle θ est dans les intervalles [125°; 180°] et [200°; 250°].

Dans un mode de réalisation, la lentille est une lentille multifocale dédiée à la vision de près et à la vision intermédiaire, et elle présente une addition définie comme la différence entre les valeurs maximale et minimale de la sphère moyenne sur la méridienne principale de progression, dans ledit cercle.

Dans un autre mode de réalisation, la lentille est une lentille multifocale progressive, et elle présente un point de référence pour la zone de vision de près, un point de référence pour la zone de vision de loin, et une addition définie comme la différence entre les valeurs de sphère moyenne en ces deux points.

D'autres caractéristiques et avantages de la présente invention apparaîtront à la lecture de la description qui suit d'un mode de réalisation de l'invention, donnée à titre d'exemple et en référence aux dessins annexés qui montrent:

- figure 1 une vue schématique de face d'une lentille multifocale progressive;
- figure 2 une représentation graphique de la puissance le long de la méridienne d'une lentille selon l'invention;
- figure 3 une vue de face de la lentille de la figure 2, montrant la méridienne principale de progression et des lignes de niveau de la sphère moyenne;
- figure 4 une vue de face de la lentille de la figure 2, montrant la méridienne principale de progression et des lignes de niveau du cylindre;
- figure 5 une représentation tridimensionnelle des pentes de sphère sur la lentille de la figure 2;
- figure 6 une représentation graphique de la sphère sur le cercle de rayon 20 mm centré sur le centre géométrique de la lentille, en fonction de l'angle, pour la lentille de la figure 2, et pour les lentilles des figures 7 à 12;
- figures 7 à 9 des vues analogues à celles des figures 2 à 4, pour une addition de 2 dioptries;
- figures 10 à 12 des vues analogues à celles des figures 2 à 4 pour une addition de 3 dioptries.

Dans la suite de la présente description, on utilise un système de coordonnées orthonormé où l'axe des abscisses correspond à l'axe horizontal de la lentille et l'axe des ordonnées à l'axe vertical; le centre O du repère est le centre géométrique de la lentille.

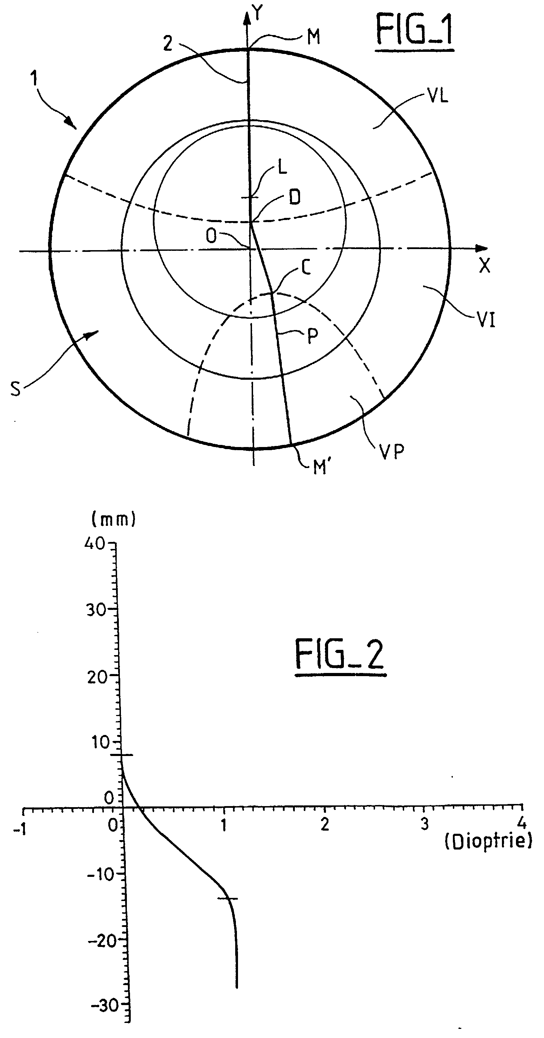

La figure 1 montre une vue schématique de face d'une lentille ophtalmique progressive connue, avec les divers éléments de cette lentille.

Les figures 2 à 6 représentent les caractéristiques optiques d'une lentille selon l'invention, qui présente un diamètre de l'ordre de 60 mm. On a décrit en référence à ces figures une lentille présentant une addition de l'ordre de 1 dioptrie.

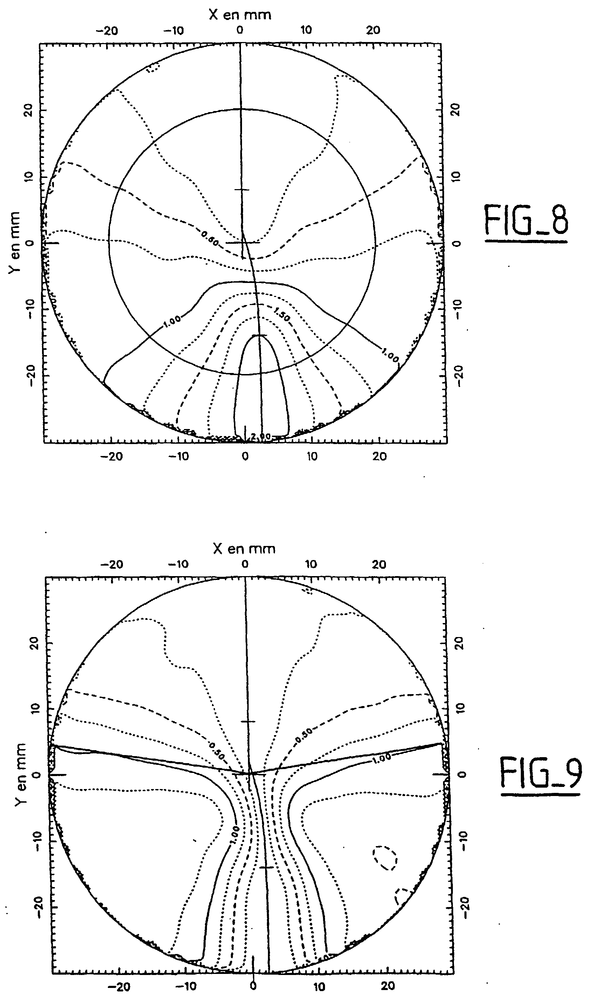

Les figures 7 à 12 représentent des vues analogues, pour des lentilles d'addition 2 ou 3.

On décrit maintenant en référence à la figure 1 les différents éléments d'une lentille ophtalmique multifocale. Une telle lentille présente généralement une face asphérique représentée sur la figure 1 et une autre face qui peut être sphérique ou torique.

En tout point de la surface asphérique, on définit une sphère moyenne D donnée par la formule:

$$D = \frac{n-1}{2} \left( \frac{1}{R_1} + \frac{1}{R_2} \right)$$

où:

R$_1$ et R$_2$ sont les rayons de courbure maximal et minimal exprimés en mètres, et
n l'indice du matériau constituant la lentille.

On définit aussi un cylindre C, donné par la formule:

$$C = (n - 1) \left| \frac{1}{R_1} - \frac{1}{R_2} \right|$$

On appelle lignes d'isosphère les lignes constituées par les projections dans le plan tangent à la surface progressive en O des points de la surface présentant une sphère moyenne de même valeur. De la même façon, on appelle ligne d'isocylindre les lignes constituées par la projection dans le plan précité des points de la surface présentant un cylindre de même valeur.

Classiquement, la lentille 1 comprend dans sa partie supérieure une zone de vision de loin VL, dans sa partie inférieure une zone de vision de près VP, et entre ces deux zones une zone intermédiaire VI. Pour une lentille progressive, on définit dans la zone de vision de près et dans la zone de vision de loin un point P de référence ou de mesure pour la vision de près et un point L de référence ou de mesure pour la vision de loin. Pour une lentille dédiée à la vision de près, on définit dans la zone de vision de près un point P de référence ou de mesure pour la vision de près; toutefois, on ne définit pas de point de référence correspondant pour la zone de vision de loin.

On a représenté sur la figure 1 en gras la méridienne principale de progression 2 de la lentille, qui traverse les zones de vision de loin, de vision intermédiaire et de vision de près. Cette méridienne est définie comme le lieu des points milieux des segments horizontaux délimités par les courbes d'isocylindre 0,50 dioptrie. Dans l'exemple de la figure 1, elle est essentiellement constituée de trois segments, le premier s'étendant sensiblement verticalement depuis le haut de la lentille, en passant par le point L, jusqu'à un point D appelé centre de montage ou croix de montage et situé entre ce point L et le centre géométrique O. Le deuxième segment s'étend à partir du point D obliquement en direction du côté nasal de la lentille, et le troisième segment part de l'extrémité C du deuxième segment et passe par le point P de mesure de la vision de près. D'autres formes de méridiennes sont possibles.

Dans le cas des lentilles ophtalmiques multifocales progressives, on définit de manière connue en soi une addition de puissance, qui est la différence de sphère moyenne entre un point P de référence de la zone de vision de près et un point L de référence de la zone de vision de loin.

Pour les lentilles multifocales dédiées à la vision de près et à la vision intermédiaire, on mesure sur la méridienne ainsi définie les valeurs minimales et maximales de la sphère, dans la limite d'un cercle de rayon 20 mm, centré sur le centre géométrique de la lentille. On appelle alors addition la différence entre ces valeurs minimales et maximales de la sphère; cette définition est sensiblement équivalente, pour les lentilles progressives, à la définition classique de l'addition comme la différence de sphère entre les points de référence pour la vision de près et la vision de loin.

Avec ces définitions, on considère généralement que la zone de vision de loin est délimitée, dans la partie supérieure de la lentille par les isocylindres de valeur égale à la moitié de l'addition. De la même façon, la zone de vision de près est délimitée, dans la partie inférieure de la lentille, par les isocylindres de valeur égale à la moitié de l'addition.

On a aussi représenté en gras sur la figure 1 la zone de la lentille balayée par le regard pour les tâches courantes. La taille et la position de cette zone sur la lentille ont été déterminées par de nombreuses campagnes de mesures effectuées dans les laboratoires de la demanderesse; on pourra se référer par exemple à IEEE 1992, Portable eye movement recorder, T. Bonnin et N. Bar, Proceedings of the 14th Annual International conference on the IEEE Engineering in Medecine and Biology Society 1992, Part 4, pages 1668-1669, à AAO 1993, Optimization of ophthalmic aspheric lenses: recording of eye movement for everyday tasks, N. Bar, T. Bonnin, C. Pedrono, Optometry and Vision Science 1993, no 12s, vol. 70 page 154, ou encore à ECEM 93, The use of visual space, poster de N. Bar. Cette zone recouvre un disque de 30 mm de diamètre centré sur le centre de montage.

Pour assurer au porteur un confort de vision maximal, on considère le cercle de diamètre 40 mm centré au centre géométrique de la lentille, qui englobe la zone de vision fovéale, et on cherche à maîtriser les variations tangentielles de la sphère le long de ce cercle. En contrôlant les variations de la sphère sur ce cercle, on maîtrise les déformations des caractéristiques optiques de la surface multifocale; la vision périphérique du porteur est ainsi améliorée. On cherche en outre à maintenir des champs de vision suffisamment larges dans la zone de vision fovéale. La présente invention permet d'obtenir une répartition équilibrée des lignes d'isosphère et des lignes d'isocylindre. Le cercle en cause est aussi représenté sur la figure 1.

Dans les lentilles de l'art antérieur, et en particulier dans celles de la demanderesse, la vision dans la zone entourant la méridienne principale de progression est tout à fait satisfaisante.

Pour améliorer la douceur des lentilles, et faciliter l'adaptation des porteurs, la présente invention propose de considérer une nouvelle définition des caractéristiques de la surface de la lentille, expliquée en référence aux figures suivantes. Ces figures correspondent au cas de lentilles multifocales progressives; l'invention s'applique mutatis mutandis aux lentilles multifocales dédiées à la vision de près.

La figure 2 est une représentation graphique de la puissance le long de la méridienne d'une lentille selon l'invention, d'addition une dioptrie. Les ordonnées sur le graphique de la figure 1 sont les ordonnées sur la lentille; les abscisses donnent en dioptries la différence de puissance avec le point de référence dans la zone de vision de loin.

Le point d'ordonnée y=8 mm sur la méridienne correspond au point L de référence pour la vision de loin, qui dans le cas de la figure, est le point de sphère minimale; en ce point, la sphère moyenne vaut 5,20 dioptries et le cylindre est nul; le point d'ordonnée y=-14 mm sur la méridienne est le point P de référence pour la vision de près; en ce point, la sphère moyenne vaut 6,22 dioptries et le cylindre vaut 0,02 dioptrie.

On appelle longueur principale de progression le rapport entre l'addition A telle que définie plus haut et la valeur maximale de la pente de sphère moyenne le long de la méridienne; ce rapport s'écrit

$$L_{pp} = A/P_{mer}$$

Dans le cas d'une lentille multifocale progressive, on a

$$L_{pp} = (S_{VP}-S_{VL})/P_{mer}$$

où $S_{VP}$ et $S_{VL}$ sont respectivement les valeurs de la sphère moyenne aux points de contrôle de la zone de vision de près et de la zone de vision de loin, et $P_{mer}$ représente la valeur maximale de la pente de sphère le long de la méridienne; cette pente de sphère correspond au module maximal du gradient de la sphère par rapport à x et ou y.

Dans le cas d'une lentille multifocale dédiée à la vision de près et à la vision intermédiaire, on a

$$L_{pp} = (S_{max}-S_{min})/P_{mer}$$

où $S_{max}$ et $S_{min}$ sont respectivement les valeurs maximale et minimale de la sphère sur la méridienne, et $P_{mer}$ a la définition donnée au paragraphe précédent.

Ce rapport est homogène à une longueur, et est représentatif de la longueur sur laquelle la sphère moyenne augmente d'une valeur correspondant à l'addition.

La figure 2 montre d'abord que la sphère reste sensiblement constante dans la zone de vision de loin, au dessus du point L. Elle montre aussi que la sphère reste sensiblement constante dans la zone de vision de près, au voisinage du point P. Enfin, elle montre que la longueur principale de progression est égale à 12,50, et donc inférieure à 16 mm. Ceci assure une vision de près satisfaisante dans une zone allant au-dessus du point de contrôle de la vision de près, et évite les mouvements de tête du porteur. On assure ainsi une vision prolongée confortable en vision de près. La pente maximale de la sphère sur la méridienne est de 0,08 dioptrie par mm.

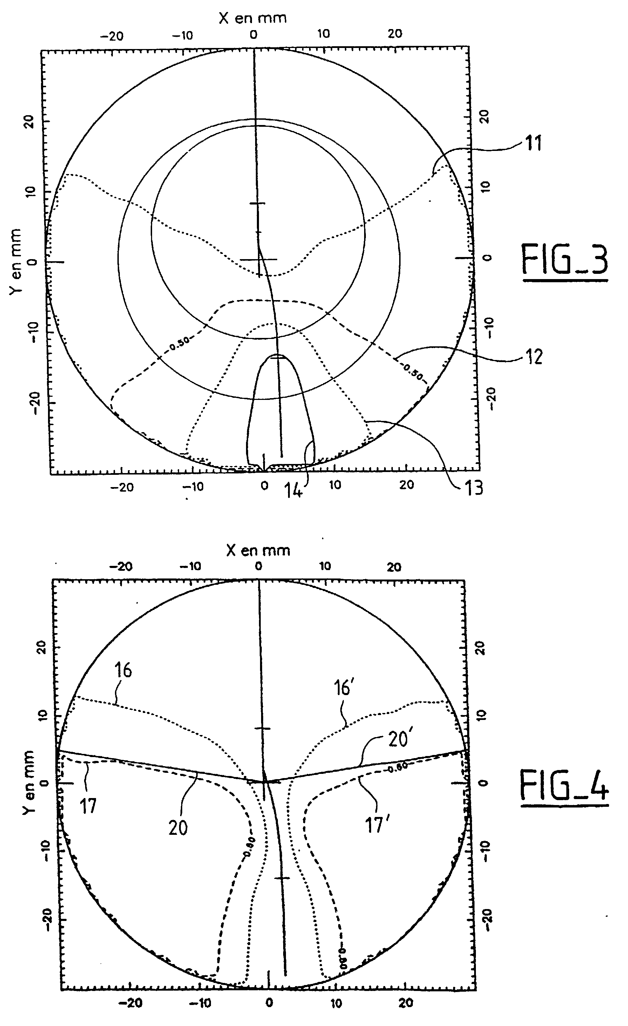

La figure 3 montre une vue de face de la lentille de la figure 2, montrant la méridienne principale de progression et des lignes de niveau de la sphère moyenne. On retrouve sur la figure 3 les éléments représentés sur la figure 2. On a en outre porté à la figure 3 les lignes d'isosphère. Les lignes d'isosphère de la figure 3 sont des lignes 11, 12, 13 et 14, qui présentent respectivement une sphère moyenne supérieure de 0,25, 0,50, 0,75 ou 1,00 dioptrie supérieure à celle du point L de vision de loin. Enfin, on a représenté sur la figure 3 un cercle d'un diamètre de 40 mm, centré sur le centre géométrique de la lentille.

La figure 4 montre une vue de face de la lentille de la figure 2, montrant la méridienne principale de progression et des lignes de niveau du cylindre. On retrouve encore sur la figure 4 les éléments représentés sur la figure 2. Comme le cylindre est faible le long de la méridienne principale de progression, les lignes d'isocylindre sont au nombre de deux pour chaque valeur du cylindre. Les lignes d'isocylindre de la figure 4 sont des lignes 16 et 16', et 17 et 17' qui présentent respectivement un cylindre de 0,25, et 0,50 dioptrie.

Comme indiqué plus haut, dans la partie supérieure de la lentille, la limite de la zone de vision de loin est sensiblement constituée par les lignes 17 et 17' d'isocylindre 0,50. La lentille de l'invention présente donc une large zone de vision de loin, s'étendant sur presque toute la moitié supérieure de la lentille. Quantitativement, la zone de vision de loin englobe ou comprend un secteur angulaire délimité par deux demi-droites 20 et 20' ayant pour origine le centre géométrique de la lentille, avec un angle au centre supérieur à 130°; dans le cas de la figure 4, l'angle au centre entre les demi-droites 20 et 20' est de l'ordre de 160°.

Dans la partie inférieure de la lentille, la limite de la zone de vision de près est aussi sensiblement constituée par les lignes 17 et 17' d'isocylindre 0,50 dioptrie.

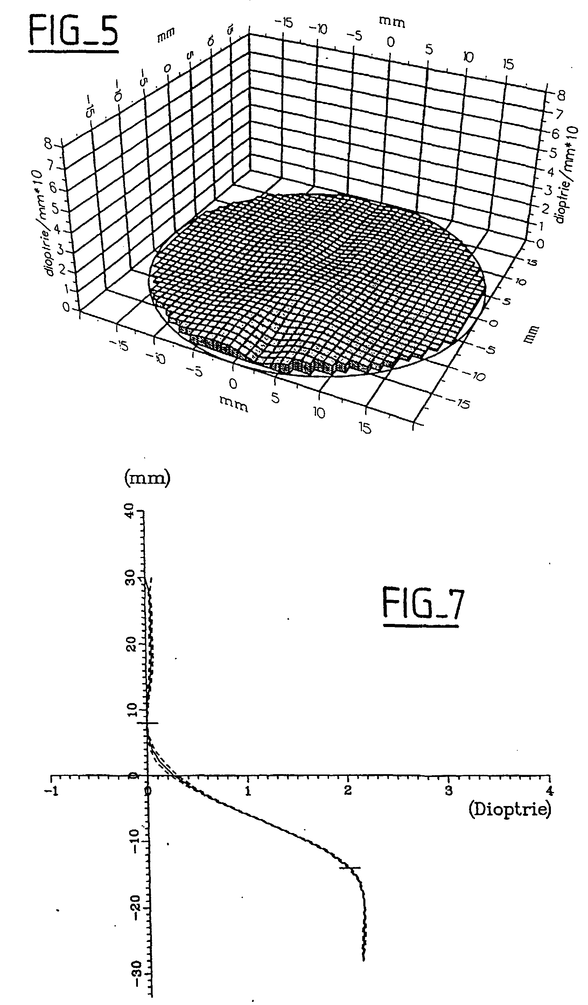

La figure 5 montre une représentation tridimensionnelle des pentes de sphère sur la lentille de la figure 2; cette figure montre en fonction de la position sur la lentille, dans le repère défini plus haut, la pente de sphère, en dioptrie par mm.

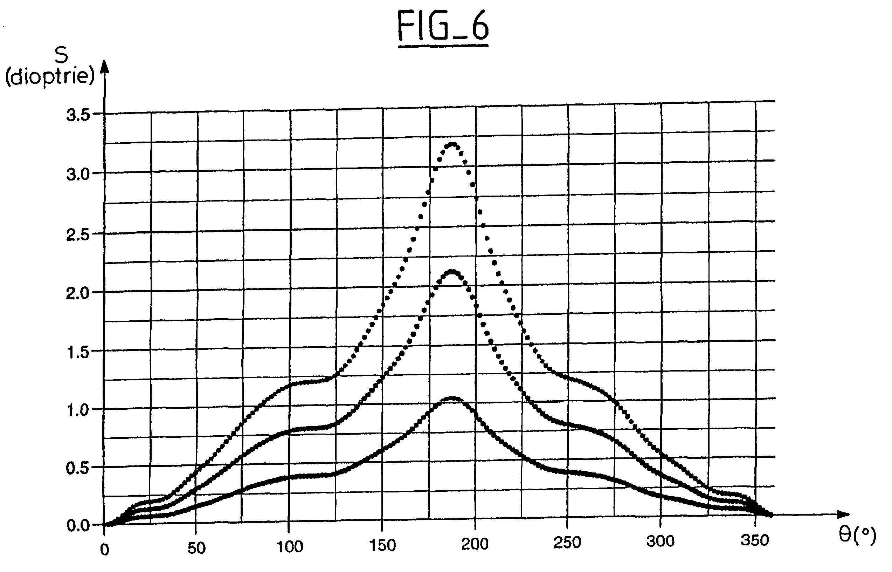

La figure 6 montre la variation de la sphère moyenne sur le cercle de diamètre 40 mm centré sur le centre géométrique de la lentille, pour différentes valeurs de l'addition; les ordonnées sont graduées en dioptrie; les abscisses représentent l'angle θ dans un système de coordonnées polaires dont le centre est le centre géométrique de la lentille et dont les angles sont mesurés à partir de la demi-droite verticale dirigée vers le haut à partir du centre géométrique de la lentille; en d'autres termes, les abscisses représentent l'angle θ entre d'une part une demi-droite verticale et dirigée vers le haut, ayant pour origine le centre géométrique et d'autre part une demi-droite ayant pour origine le centre géométrique et passant par le point du cercle pour lequel on mesure la sphère. La courbe du bas sur la figure 6 correspond à la variation de la sphère sur le cercle de diamètre 40 mm, pour la lentille d'addition une dioptrie représentée aux figures 2 à 5; la courbe du milieu et la courbe du haut sur la figure 6 illustrent respectivement les mêmes variations, pour des lentilles d'addition deux et trois dioptries.

La figure 6 montre que l'évolution de la sphère sur le cercle de rayon 20 mm centré sur le centre géométrique de la lentille est monotone, lorsque l'on se déplace sur le cercle depuis un point d'intersection de la méridienne vers l'autre point d'intersection du cercle avec la méridienne.

Autrement dit, sur la figure 6, le point d'abscisse θ 0° ou 360° correspond au point de coordonnées x = 0 mm, y = 20 mm dans le repère orthonormé défini plus haut, et correspond aussi sensiblement au point d'intersection de la méridienne et du cercle, dans la partie supérieure de la lentille.

Le point d'abscisse θ = 187° sur la figure 6 est le point pour lequel la sphère est maximale; ce point correspond à l'intersection du cercle avec la méridienne dans la partie inférieure de la lentille, et présente dans le repère orthonormé défini plus haut les coordonnées x = 3,47 mm, y = - 19,70 mm.

Lorsque l'on parcourt le cercle, depuis le point d'angle θ = 0° vers le point d'angle θ = 187°, la sphère est une fonction croissante de l'angle; lorsque l'on parcourt le cercle, depuis le point d'angle θ = 187° vers le point d'angle θ = 0°, la sphère est une fonction décroissante de l'angle.

Cette condition sur la variation monotone de la sphère sur le cercle, de part et d'autre de la méridienne, assure une variation douce et uniforme des caractéristiques optiques de la lentille, tant à l'intérieur de la zone fovéale qu'à l'extérieur de celle-ci.

La lentille des figures 2 à 6 assure ainsi une grande douceur, et une plus grande facilité d'adaptation du porteur aux lentilles.

Quantitativement, ceci se traduit par les conditions suivantes:

(1) la zone de vision de loin comprend un secteur angulaire d'origine le centre géométrique de la lentille, avec un angle au centre d'au moins 150°;
(2) la longueur principale de progression, i. e. le rapport entre l'addition et la pente maximale de sphère moyenne sur la méridienne, est inférieure à 16 mm, et
(3) la variation de la sphère sur le cercle de rayon 20 mm centré sur le centre géométrique de la lentille est monotone de part et d'autre de la méridienne.

La relation (1) comme expliqué plus haut, fournit une limite inférieure à la surface de la zone de vision de loin.

La relation (2) traduit le fait que la longueur principale de progression de la lentille est faible, et donc que la zone de vision de près est suffisamment haute sur le verre pour assurer au porteur un confort optimum en vision de près.

La troisième relation assure, par une monotonie des variations de la sphère moyenne au bord de la zone fovéale et compte tenu des propriétés de continuité et de dérivabilité des surfaces progressives bien connues de l'homme du métier, une bonne maîtrise des variations des paramètres optiques à l'intérieur comme à l'extérieur de cette zone.

La combinaison de ces trois conditions assure une bonne répartition des lignes d'isosphère et d'isocylindre sur la surface de la lentille, et assure ainsi une grande douceur de la lentille.

La combinaison de ces trois conditions n'est satisfaite par aucune des lentilles ophtalmiques multifocales de l'art antérieur testées par la demanderesse. L'invention assure pour la première fois une telle répartition des lignes d'isocylindre et d'isosphère.

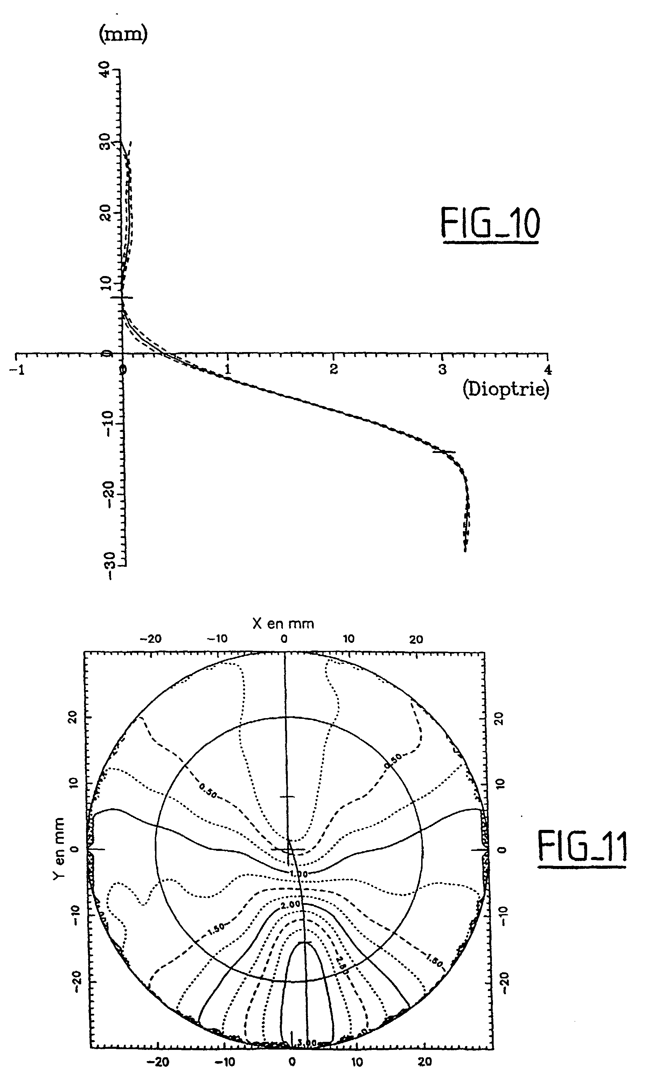

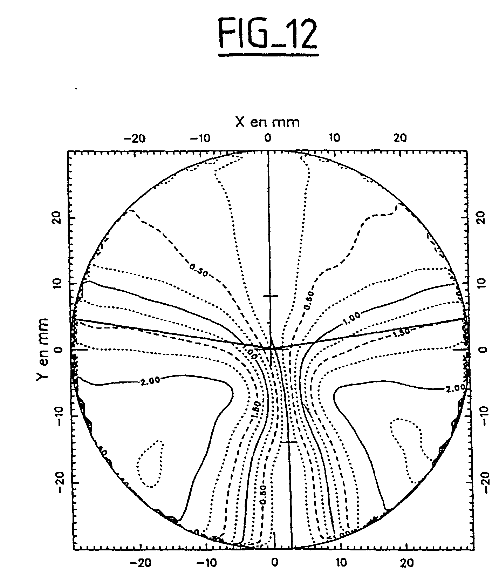

Les figures 7 à 9 montrent des vues analogues à celles des figures 2 à 4, mais pour une lentille d'addition 2 dioptries; les figures 10 à 12 montrent des vues analogues à celles des figures 2 à 4, mais pour une lentille d'addition 3 dioptries. On a représenté sur les figures 8 et 11 les lignes d'isospère, avec un pas de 0,25 dioptrie; sur les figures 9 et 12 sont tracées les lignes d'isocylindre, avec un pas de 0,25 dioptrie. On a encore représenté sur ces figures les demi-droites tangentes aux lignes d'isocylindre A/2, dans la zone de vision de loin.

Pour chacune de ces lentilles, ces trois conditions sont satisfaites. Dans le cas de la lentille des figures 2 à 5, on a, comme indiqué plus haut:

angle au centre du secteur angulaire inclus dans la zone de vision de loin : 163°;

$$L_{pp} = 12,50 \text{ mm};$$

Pour les lentilles d'addition 2 et 3 dioptries, les valeurs de l'angle au centre et de la longueur principale de progression sont les mêmes.

L'invention propose d'autres caractéristiques avantageuses, qui, en combinaison avec ces trois conditions, permettent d'améliorer les performances de la lentille de l'invention.

L'invention propose aussi que la zone de vision de près présente à la hauteur du point de référence pour la vision de près une largeur d'au moins 12 mm, et de préférence supérieure à 13 mm; cette largeur est mesurée à l'ordonnée du point P, entre les lignes d'isocylindre A/2, A étant l'addition, définie comme plus haut. Comme on peut le voir sur la figure 3, dans le cas d'une addition d'une dioptrie, la largeur de la zone de vision de près est de 13,5 mm. Pour une addition de deux ou de trois dioptries, elle présente une valeur sensiblement identique.

Dans un mode de réalisation de l'invention, l'angle au centre du secteur angulaire contenu dans la zone de vision de loin est compris entre 160 et 170°, et est de préférence voisin de 165°; dans les exemples des figures, cet angle au centre est sensiblement de 163° pour la lentille d'addition une dioptrie, comme pour les lentilles d'addition deux ou trois dioptries.

On impose aussi avantageusement des limites à la pente de la sphère moyenne sur le cercle de rayon 20 mm; cette pente est en fait la dérivée $dS/d\theta$ de la fonction représentée sur les courbes de la figure 6.

Le tableau qui suit donne les valeurs moyennes de la valeur absolue de la pente, pour différentes valeurs des angles, et pour différentes additions.

| addition\$dS/d\theta$ | 30-100° | 125-180° | 200-250° | 270-325° |
|---|---|---|---|---|
| une dioptrie | 0,005 | 0,012 | 0,013 | 0,005 |
| deux dioptries | 0,010 | 0,025 | 0,026 | 0,01 |
| trois dioptries | 0,015 | 0,036 | 0,040 | 0,015 |

Dans tous les cas, la valeur absolue de la pente est comprise entre 0,005 et 0,015 pour les valeurs d'angle $\theta$ dans [30°; 100°] ou [270°; 325°]; elle est comprise entre 0,01 et 0,04 pour les valeurs d'angle $\theta$ dans [125°; 180°] ou [200°; 250°].

On détaille maintenant les différentes caractéristiques qui permettent de réaliser les différentes lentilles selon l'invention. La surface des lentilles est de façon connue en soi, continue et trois fois continûment dérivable. Comme cela est connu de l'homme du métier, la surface de lentilles progressives s'obtient par optimisation numérique à l'aide d'un calculateur, en fixant des conditions aux limites pour un certain nombre de paramètres de la lentille.

On peut utiliser comme conditions aux limites la combinaison des trois conditions définies plus haut, avec le cas échéant un ou plusieurs des autres critères définis plus haut.

Ces critères s'appliquent tant pour une lentille multifocale progressive classique, avec un point de référence dans la zone de vision de près et un point de référence dans la zone de vision de loin, que pour une lentille multifocale dédiée à la zone de vision de près.

On peut aussi avantageusement commencer par définir, pour chacune des lentilles de la famille, une méridienne principale de progression. On peut utiliser à cet effet l'enseignement du brevet FR-A-2 683 642 susmentionné. On peut aussi utiliser toute autre définition de la méridienne principale de progression pour appliquer l'enseignement de l'invention.

Bien entendu, la présente invention n'est pas limitée à la présente description: entre autres, la surface asphérique pourrait être la surface dirigée vers le porteur des lentilles. Par ailleurs, on n'a pas insisté dans la description sur l'existence de lentilles qui peuvent être différentes pour les deux yeux.

**Revendications**

1. Lentille ophtalmique multifocale, comportant une surface asphérique (S) présentant en tout point une sphère moyenne et un cylindre, et comprenant une zone de vision de loin (VL), une zone de vision de près (VP), une zone de vision intermédiaire (VI), une méridienne principale de progression (MM') traversant ces trois zones, dans laquelle

   la zone de vision de loin délimitée dans la partie supérieure de la lentille par des lignes formées des points dont le cylindre est égal à la moitié de l'addition englobe un secteur angulaire ayant pour origine le centre géométrique de la lentille et un angle au centre supérieur à 150°,
   la longueur principale de progression ($L_{pp}$) définie comme le rapport entre l'addition et la pente maximale de sphère moyenne $P_{mer}$ le long de la méridienne est inférieure à 16 mm;
   la sphère varie de façon monotone en fonction de l'angle, sur un cercle de rayon 20 mm centré sur le centre géométrique de la lentille, de part et d'autre de la méridienne.

2. Lentille selon la revendication 1, caractérisée en ce que la méridienne principale de progression est constituée des milieux des segments horizontaux reliant les lignes respectives formées des points de cylindre 0,50 dioptries.

3. Lentille selon la revendication 1, caractérisée en ce que la zone de vision de près, délimitée dans la partie inférieure de la lentille par des lignes formées des points dont le cylindre est égal à la moitié de l'addition présente une largeur supérieure à 12 mm à la hauteur d'un point de référence pour la vision de près.

4. Lentille selon la revendication 1 ou 2, caractérisée en ce que ledit angle au centre présente une valeur comprise entre 160° et 170°, de préférence de l'ordre de 165°.

5. Lentille selon l'une des revendications 1 à 4, caractérisée en ce que le module de la dérivée $dS/d\theta$ de la sphère moyenne par rapport à l'angle sur ledit cercle est compris entre 0,005 et 0,015 lorsque l'angle $\theta$ est dans les intervalles [30°; 100°] et [270°; 325°].

6. Lentille selon l'une des revendications 1 à 5, caractérisée en ce que le module de la dérivée $dS/d\theta$ de la sphère moyenne par rapport à l'angle sur ledit cercle est compris entre 0,01 et 0,04 lorsque l'angle $\theta$ est dans les intervalles [125°; 180°] et [200°; 250°].

7. Lentille selon l'une des revendications 1 à 6, caractérisée en ce que la lentille est une lentille multifocale dédiée à la vision de près et à la vision intermédiaire, et en ce qu'elle présente une addition définie comme la différence entre les valeurs maximale et minimale de la sphère moyenne sur la méridienne principale de progression, dans ledit cercle.

8. Lentille selon l'une des revendications 1 à 6, caractérisée en ce que la lentille est une lentille multifocale progressive, et en ce qu'elle présente un point de référence pour la zone de vision de près, un point de référence pour la zone de vision de loin, et une addition définie comme la différence entre les valeurs de sphère moyenne en ces deux points.

**Patentansprüche**

1. Ophtalmische multifokale Linse mit einer aspherischen Fläche (S), die bei jedem Punkt eine mittlere Flächenbrechkraft und einen Flächenastigmatismus aufweist, und welche eine Fernsichtzone (VL), eine Nahsichtzone (VP), eine Mittelsichtzone (VI) sowie einen Hauptprogressionsmeridian (MM) umfaßt, welcher diese drei Zonen durchquert,
wobei die Fernsichtzone, die in dem oberen Abschnitt der Linse durch Linien begrenzt ist, die aus Punkten gebildet sind, deren Flächenastigmatismus gleich zu der Hälfte der Addition ist, einen Winkelsektor umfaßt, welcher als Ursprung die geometrische Mitte der Linse und einen Winkel in der Mitte von mehr als 150 ° aufweist,
wobei die Hauptprogressionslänge ($L_{pp}$), definiert als die Beziehung zwischen der Addition und dem Maxmalgradienten der mittleren Brechkraft ($P_{mer}$) entlang dem Meridian kleiner als 16 mm ist,
und wobei sich die mittlere Flächenbrechkraft monoton abhängig von dem Winkel an einem an der geometrischen Mitte der Linse zentrierten Kreises mit Radius von 20 mm beidseitig des Meridians verändert.

2. Linse nach Anspruch 1, **dadurch gekennzeichnet, daß** der Hauptprogressionsmeridian gebildet ist aus Mitten von horizontalen Segmenten, die die jeweiligen Linien verbinden, die aus Punkten gebildet sind, bei denen der Flächenastigmatismus 0,50 Dioptrien beträgt.

3. Linse nach Anspruch 1, **dadurch gekennzeichnet, daß** die Nahsichtzone, begrenzt in dem unteren Abschnitt der Linse durch Linien, die gebildet sind durch Punkte, deren Flächenasfigmatismus gleich ist zu der Hälfte der Addition, eine Breite aufweist, die größer als 12 mm auf der Höhe eines Referenzpunkts für die Nahsichtzone ist.

4. Linse nach einem der Ansprüche 1 oder 2, **dadurch gekennzeichnet, daß** der Mittelwinkel einen Wert aufweist, der enthalten ist zwischen 160 ° und 170 °, insbesondere 165 ° ausmacht.

5. Linse nach einem der Ansprüche 1 bis 4, **dadurch gekennzeichnet, daß** das Ableitungs-modul $dS/d\Theta$ der mittleren F1ächcnbtechkraft mit Bezug auf den Winkel an dem Kreis, enthalten ist zwischen 0,005 und 0,015, wenn der Winkel Θ in den Intervallen [30 °; 100 °] und [270 °; 325 °] liegt.

6. Linse nach einem der Ansprüche 1 bis 5, **dadurch gekennzeichnet, daß** das Ableitungs-modul dS/dΘ der mittleren Flächenbrechkraft mit Bezug auf den Winkel an dem Kreis, enthalten ist zwischen 0,01 und 0,04, wenn der Winkel Θ in den Intervallen [125 °; 180 °] und [200 °; 250°] liegt.

7. Linse nach einem der Ansprüche 1 bis 6, **dadurch gekennzeichnet, daß** die Linse eine multifokale Linse ist, die der Nahsichtzone und der Mittelsichtzone gewidmet ist, und daß sie eine Addition aufweist, definiert als die Differenz zwischen dem Maximalwert und dem Minimalwert der mittleren Flächenbrechkraft an dem Hauptprogressionsmeridian in dem Kreis.

8. Linse nach einem der Ansprüche 1 bis 6, **dadurch gekennzeichnet, daß** die Linse eine progressive multifokale Linse ist, und daß sie aufweist einen Referenzpunkt für die Nahsichtzone, einen Referenzpunkt für die Fernsichtzone, sowie eine Addition, definiert als die Differenz zwischen Werten der mittleren Flächenbrechkraft in diesen beiden Punkten.

## Claims

1. A multifocal ophthalmic lens comprising an aspherical surface having at every point thereon a mean sphere and a cylinder, and comprising a far vision region (VL), a near vision region (VP), an intermediate vision region (VI), a main meridian of progression (MM') passing through said three regions, in which

   the far vision region delimited in an upper portion of said lens by lines formed of points for which cylinder is equal to half power addition includes an angular sector having its origin at the geometric center of the lens with an included angle greater than 150°
   the principal length of progression (Lpp), defined as a ratio between power addition and maximum slope of mean sphere along said meridian is less than 16 mm;
   sphere varies in a monotonous fashion as a function of angle on a 20 mm radius circle centered on a geometric center of the lens at both sides of said meridian.

2. The lens according to claim 1, wherein said main meridian of progression is made up by mid-points of horizontal segments joining respective lines formed by points where cylinder is 0.50 diopter.

3. The lens according to claim 1, wherein said near vision region, delimited in an upper portion of said lens by lines formed by points where cylinder is equal to half power addition has a width that is greater than 12 mm at a point of reference for near vision.

4. The lens according to claim 1 or 2, wherein said included angle has a value comprised between 160° and 170°, preferably of the order of 165°.

5. The lens according to one of claims 1 to 4, wherein the modulus of the derivative dS/dθ of mean sphere with respect to angle on said circle is comprised between 0.005 and 0.015 when said angle θ is comprised in the ranges [30°; 100°] and [270°; 325°].

6. The lens according to one of claims 1 to 5, wherein the modulus of the derivative dS/dθ of mean sphere with respect to angle on said circle is comprised between 0.01 and 0.04 when said angle θ is comprised in the ranges [125°; 180°] and [200°; 250°] .

7. The lens according to one of claims 1 to 6, wherein the lens is a multifocal lens dedicated to near vision and intermediate vision, said lens having a power addition defined as a difference between maximum and minimum values of mean sphere on said meridian of progression, inside said circle.

8. The lens according to one of claims 1 to 6, wherein said lens is a progressive multifocal lens having a reference point for a near vision region, a reference point for a far vision region, and a power addition defined as a difference between the values of mean sphere at these two points.

FIG_1

FIG_2

FIG_3

FIG_4

FIG_5

(mm)

FIG_7

(Dioptrie)

FIG_6

FIG_8

FIG_9

FIG_10

FIG_11

# FIG_12